# EUROPÄISCHE PATENTSCHRIFT

(11) **EP 0 380 826 B1**
(45) Veröffentlichungstag und Bekanntmachung des Hinweises auf die Patenterteilung: **19.01.1994**
(21) Anmeldenummer: 89250087.7
(22) Anmeldetag: 14.11.1989
(51) Int. Cl.: B01D 29/01

(54) **Bandfilterapparat mit schwenkbarer Klappe**
Band filter with pivoting filter shell
Filtre à bande avec un clapet pivotant

(30) Priorität: 05.12.1988 DE 8815303 U
(43) Veröffentlichungstag der Anmeldung: 08.08.1990
(73) Patentinhaber: MANNESMANN Aktiengesellschaft, 40027 Düsseldorf (DE)
(72) Erfinder: Triesch, Josef, Dipl.-Ing., D-4000 Düsseldorf (DE)
(74) Vertreter: Meissner, Peter E., Dipl.-Ing.

(56) Entgegenhaltungen:
- DE-A- 1 536 821
- DE-A- 2 053 342

## Beschreibung

Die Erfindung betrifft eine schwenkbare Klappe zum flüssigkeitsdichten Verschluß der für den Ein- und Austritt des durchlaufenden Filterbandes an den Schmalseiten des Filterbehälters von Bandfilterapparaten angeordneten Spaltöffnungen, wobei die außerhalb des Behälters angeordnete Klappe mittels zweiarmiger Hebel an einem Gelenkpunkt nach oben schwenkbeweglich aufgehängt ist und die Hebel über kraftarmseitig angeordnete Lenker mit der Kolbenstange eines Arbeitszylinders kinematisch gekoppelt sind.

Während der Filtration und auch beim anschließenden Leerblasen stehen Bandfilteranlagen dieser Art unter einem Überdruck, wodurch Dichtungsprobleme an den seitlichen Durchlaßöffnungen für das Filterband, die während des Filtervorganges durch Klappen verschlossen sind, entstehen. Versuche, diese Dichtungsprobleme dadurch zu lösen, daß Innenklappen verwendet werden, die durch den Innendruck selbsttätig auf die Dichtflächen gepreßt werden haben sich als nachteilig herausgestellt, weil Feststoffe aus der zu filternden Flüssigkeit die Dichtflächen verschmutzen und sowohl die Dichtwirkung als auch die Beweglichkeit der Klappe behindern.

Aus der DE-A-2053342 ist ein Bandfilterapparat mit schwenkbarer Klappe gemäß dem Oberbegriff von Anspruch 1 bekannt. Diese Lösung ist sehr aufwendig, insbesondere wenn man die Zahl der verwendeten Hebel, Gestänge und Gelenke betrachtet. Die bekannte Lösung benötigte zwei parallel wirkende Kolben-Zylinder-Einheiten in Verbindung mit auf jeder Seite sechs Gelenken, von denen eines den Zylinder selbst gelenkig anordnete. Die vorgeschlagene Kinematik setzt nämlich voraus, daß die Kolben-Zylinder-Einheit schwenkbar angelenkt ist. Bei dieser Vielzahl verwendeter Gelenke können sich Lagerspiele zu Werten addieren, die die Funktion der Klappe infrage stellen.

Aus diesem Grund hat der vorliegenden Erfindung die Aufgabe, einen Verschließmechanismus der gattungsgemäßen Art so zu verbessern, daß er einfach im Aufbau und zuverlässig in der Schließwirkung ist.

Zur Lösung der Aufgabe wird erfindungsgemäß vorgeschlagen, daß die beiden parallel zueinander angeordneten Lenker an ihren freien Enden durch eine quer zur Erstreckungsrichtung der Lenker verlaufende Stange verbunden sind, an deren mittleren Bereich die Kolbenstange des Arbeitszylinders angreift und daß auf der Stange Druckrollen gelagert sind, die sich bei in Endstellung gefahrener Kolbenstange des Arbeitszylinders gegen Widerlager abstützen wobei jeweils der Anlenkpunkt eines Lenkers an den Hebeln, der Mittelpunkt der Druckrolle sowie deren Berührungspunkt am Widerlager an einer gedachten Geraden liegen. Dadurch wirkt das System selbsthemmend, so daß die Klappe geschlossen bleibt, auch wenn ein Arbeitszylinder ausfällt.

In einer Ausgestaltung der Erfindung ist vorgesehen, daß die Widerlager einstellbar sind.

Um ein Ausknicken der Kolbenstange zu vermeiden, ist nach einer weiteren Ausgesteltung der Erfindung vorgesehen, die Druckrolle auf mindestens einer parallel zur Bewegungsrichtung der Kolbenstange verlaufenden Bahn zu führen.

Durch die Erfindung wird ein kompakter und einfacher Verschließmechanismus für die Klappe vorgeschlagen, der vorzugsweise nur von einem einzigen Arbeitszylinder betätigt werden kann. Die Verwendung findenden Druckrollen, die in einer Streckstellung der Lenker eine selbsthemmende Sperrung der Klappe bewirken, können gleichzeitig über den in die Endstellung gefahrenen Arbeitszylinder unter eine Spannkraft gesetzt werden, mit der die Klappe sicher gegen die Dichtung des Behälters gepreßt wird. In dieser gestreckten selbstsperrenden Stellung ist der Arbeitszylinder entlastet, so daß dieser nicht gegen den Arbeitsdruck im Behälter wirken muß und dementsprechend kleiner dimensioniert ausgeführt sein kann.

Um zu verhindern, daß es beim Schließen der Klappe zu Undichtigkeiten dadurch führt, daß die Klappe verkantet oder einseitig zur Anlage kommt, ist anzustreben, daß die Klappe unmittelbar vor dem Verschließen parallel zu den Dichtflächen der Behälterwand steht. Da dies bei den bisherigen Lösungen mit vorzugsweise über Schrauben einstellbaren Klappen nicht immer exakt gewährleistet war, wird bei einer schwenkbaren Klappe nach dem Oberbegriff des Patentanspruchs 1 erfindungsgemäß vorgeschlagen, daß die Klappe an den Lastarmen der Hebel elastisch derart angelenkt ist, daß dieselbe kurz vor Erreichen der Verschlußstellung parallel zu der die Spaltöffnung umgebenden Behälterwand eingestellt ist. Die Klappe wird also elastisch im wesentlichen in der Verschlußposition gehalten, wobei geringfügige Abweichungen von der Parallelstellung durch die Elastizität aufgenommen werden, so daß die Klappe sich selbst zentrieren kann.

Erfindungsgemäß kann die Anlenkung über elastische Zwischenlagen aus Gummi oder Kunststoff oder durch zwischengeschaltete Druckfedern erfolgen.

Ein Ausführungsbeispiel der Erfindung ist in der Zeichnung dargestellt und wird nachfolgend beschrieben. Es zeigen:
- Fig. 1: einen Querschnitt durch den Verschlußmechanismus des Behälters,
- Fig. 2: eine um 90 Grad gedrehte Ansicht einer Hälfte der Verschlußklappenseite.
- Fig. 3: einen Querschnitt durch den Verschlußmechanismus nach Figur 1 mit einer Druckfeder zur elastischen Anlenkung der Klappe und
- Fig. 4: eine Alternative der elastischen Anlenkung nach Figur 3 mit Gummizwischenlage.

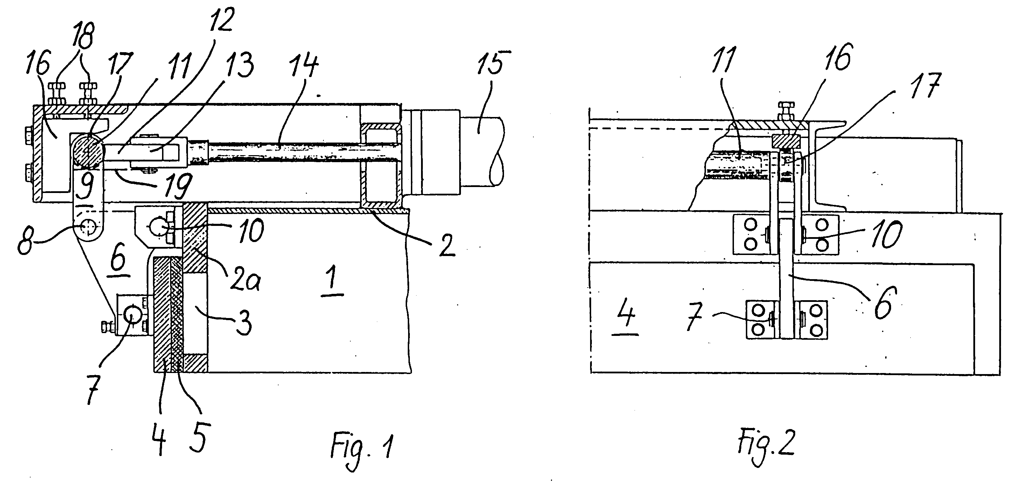

In Figur 1 ist mit 1 die Filterkammer des Behälters 2 bezeichnet, der bei 3 eine Öffnung aufweist, durch die das Filterband in bekannter (nicht dargestellter) Weise geführt ist. Die Öffnung 3 wird durch eine Dichtungsklappe 4 verschlossen, die mit einem elastischen Dichtungswerkstoff 5 belegt ist, der gegen die Wand 2a des Behälters anpreßbar ist.

Zum Öffnen und Schließen der Klappe 4 dient ein Mechanismus, der im wesentlichen aus dem zweiarmigen Hebel 6 besteht, an dessen Lastarm bei 7 die Klappe 4 angelenkt ist und an dessen Kraftarm bei 8 ein Lenker 9 angeschlossen ist. Der Hebel 6 ist bei 10 an der Behälterwand 2a des Behältes 2 schwenkbar angelenkt.

Von diesen Hebeln 6 sind vorzugsweise mindestens zwei parallel zueinander an der Seitenwand 2a des Behälters 2 vorgesehen; an beiden Hebeln 6 greift der Lenker 9 an, wobei beide Lenker 9 durch die Stange 11 miteinander verbunden sind, wie in Figur 2 erkennbar.

An einem an der Stange 11 angeschweißten Joch 12 greift bei 13 die Kolbenstange 14 des Arbeitszylinders 15 etwa mittig der Stange an, so daß beim Einfahren der Kolbenstange 14 über das Joch 12 die Stange 11 und damit die beiden Hebel (in der Zeichnungsebene nach rechts) gezogen werden. Bei ggfs. geführter Kolbenstange 14 zieht der Hebel 9 am Anlenkpunkt 8 den zweiarmigen Hebel 6 um den Schwenkpunkt 10 und bewirkt damit ein Öffnen der Klappe 4.

Beim Schließen der Klappe bewegt sich die Kolbenstange 14 (in der Zeichnungsebene) nach links und drückt über den Lenker 9 den zweiarmigen Hebel 6 nach unten, so daß sich die Klappe schließt. Damit die Schließwirkung der Klappe gewährleistet und der Zylinder 15 vom Arbeitsdruck des Behälters entlastet ist, sind an der Stange 11 an beiden Enden Druckrollen gelagert, die sich in der Endstellung (ausgefahrenen Stellung) der Kolbenstange 14 gegen Widerlager 16 abstützen, während sich der Lenker 9 in senkrechter Stellung befindet. Dadurch wird der in dem Behälter 1 anstehende Arbeitsdruck, der die Klappe durch Verschwenken des zweiarmigen Hebels 6 um den Schwenkpunkt 10 zu öffnen sucht, über die sich bei 8 abstützenden Lenker 9 und über die Rolle in das Widerlager 16 eingeleitet, so daß die Klappe 4 geschlossen bleibt. Das Widerlager 16 ist vorzugsweise einstellbar 18, wobei eine Vorspannung des Lenkers 9 vorgesehen sein kann, die beim öffnen der Klappe vom Arbeitszylinder 15 überwunden wird. Günstigerweise ist das Widerlager 16 arbeitszylinderseitig angeschrägt, so daß die Rolle 17 stufenlos in ihre Druckposition bewegt werden kann.

Durch die Anordnung der Lenker 9 und der Anlenkpunkte 8 in Bezug auf das Widerlager 16 und den Mittelpunkt der Druckrolle 17 wirkt das System selbsthemmend, auch bei Ausfall eines Arbeitszylinders.

Gegen Ausknicken der Kolbenstange 14 ist vorgesehen, die Druckrolle 17 auf einer Bahn zu führen, die bei 19 angedeutet ist und die parallel zur Bewegungsrichtung der Kolbenstange 14 verläuft.

Um sicherzustellen, daß die Klappe 4 mit ihrer Dichtung 5 sich gleichmäßig dichtend an die Behälterwand 2a anlegt, ist erfindungsgemäß vorgesehen, zwischen die Anlenkung 7 und die Klappe 4 eine Druckfeder 20 zu schalten, die geringfügige Abweichungen von der Parallelität zwischen Klappe 4 und Behälterwand 2a elastisch ausgleicht. Die Druckfeder ist so eingestellt, daß kurz vor Erreichen der verschlußstellung der Klappe 4 diese parellel zur Behälterwand 2a steht.

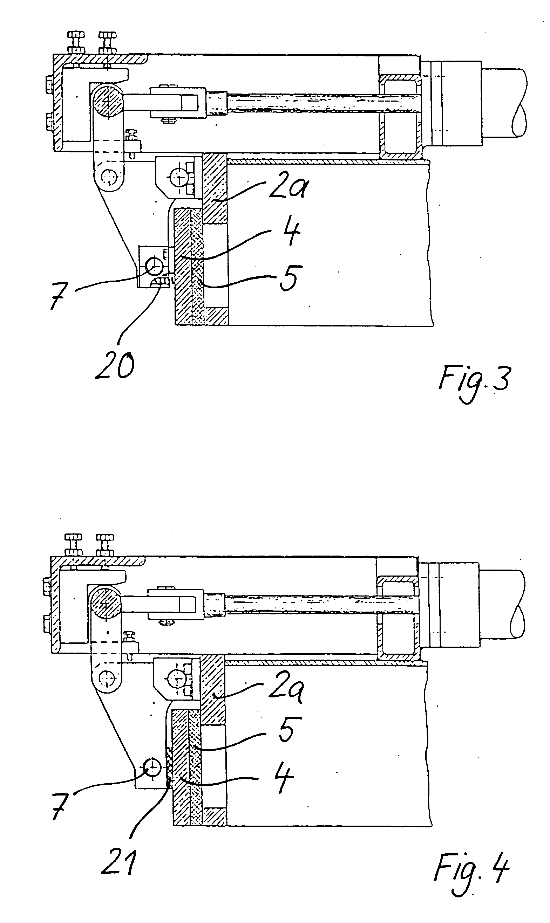

In einem anderen Ausführungsbeispiel, das in Figur 4 dargestellt ist, ist zwischen Klappe 4 und Anlenkung 7 am Hebel 6 eine elastische Zwischenlage 21 aus Gummi angeordnet, die die gleiche Funktion wie die Druckfeder nach Figur 3 erfüllt.

## Patentansprüche

1. Bandfilterapparat mit schwenkbarer Klappe (4) zum flüssigkeitsdichten Verschluß der für den Ein- und Austritt des durchlaufenden Filterbandes an den Schmalseiten des Filterbehälters (1) angeordneten Spaltöffnungen (3), wobei die außerhalb des Behälters (2) angeordnete Klappe (4) mittels zweiarmiger Hebel (6) an einem Gelenkpunkt (10) nach oben schwenkbeweglich aufgehängt ist und die Hebel (6) über kraftarmseitig angeordnete Lenker (9) mit der Kolbenstange (14) eines Arbeitszylinders (15) kinematisch gekoppelt sind, dadurch gekennzeichnet, daß mindestens zwei parallel zueinander angeordnete Lenker (9) an ihren freien Enden durch eine quer zur Erstreckungsrichtung der Lenker verlaufende Stange (11) verbunden sind, an deren mittlerem Bereich die Kolbenstange (14) des Arbeitszylinders (15) angreift und daß auf der Stange (11) Druckrollen (17) gelagert sind, die sich bei in Endstellung gefahrener Kolbenstange (14) des Arbeitszylinders (15) gegen Widerlager (16) abstützen, wobei jeweils der Anlenkpunkt (8) eines Lenkers an den Hebeln (6), der Mittelpunkt der Druckrolle (17) sowie deren Berührungspunkt am Widerlager (16) auf einer gedachten Geraden liegen.

2. Bandfilterapparat mit schwenkbarer Klappe nach Anspruch 1,
dadurch gekennzeichnet,
daß die Widerlager (16) für die Druckrollen (17) einstellbar (18) sind.

3. Bandfilterapparat mit schwenkbarer Klappe nach Anspruch 1 und 2,
dadurch gekennzeichnet,
daß die Druckrolle (17) auf mindestens einer parallel zur Bewegungsrichtung der Kolbenstange verlaufenden Bahn (19) geführt ist.

4. Bandfilterapparat mit schwenkbarer Klappe nach Anspruch 1,
dadurch gekennzeichnet,
daß die Klappe (4) an den Lastarmen der Hebel (6) elastisch (20, 21) derartig angelenkt ist, daß dieselbe kurz vor Erreichen der Verschlußstellung durch Anlage der elastischen Dichtung (5) parallel zu der die Spaltöffnung (3) umgebenden Behälterwand (2a) einstellbar ist.

5. Bandfilterapparat mit schwenkbarer Klappe nach Anspruch 4,
dadurch gekennzeichnet,
daß zwischen Klappe (4) und lastarmseitigen Anlenkungen (7) an den Hebeln (6) elastische Zwischenlagen (21) aus Gummi oder Kunststoff angeordnet sind.

6. Bandfilterapparat mit schwenkbarer Klappe nach Anspruch 4,
dadurch gekennzeichnet,
daß zwischen Klappe (4) und lastarmseitigen Anlenkungen (7) an den Hebeln (6) Druckfedern (19) eingesetzt sind.

## Claims

1. Strip filter apparatus with swivelling cover (4) for liquid-tight sealed closure of the openings (3) for the entrance and outlet of the passing filter strip disposed on the narrow side of the filter container (1), the cover (4) disposed on the exterior of the container (2) being suspended so as to be able to swivel upwards from an articulation point (10) by means of two-armed levers (6) and the levers (6) are connected through movement with the piston rod (14) of an operating cylinder (15) by means of guide members (9) on the leverage-arm side, wherein at least two guide members (9) which are disposed parallel to each other are connected at their free ends by a rod (11) running across the lengthwise direction of the guide members, and the piston rod (14) of the operating cylinder (15) grips the central area of the said rod and pressure rollers (17) are bedded on the rod (11), and the said pressure rollers are supported against abutments (16) when the piston rod (14) of the operating cylinder (15) is in its final position, in each case the point of articulation (8) of a guide member on the levers (6), the central point of the pressure roller (17) and its point of contact with the support (16) lying on an imaginary straight line.

2. Strip filter apparatus in accordance with claim 1, wherein the supports (16) for the pressure rollers (17) can be adjusted (18).

3. Strip filter apparatus in accordance with claims 1 and 2, wherein the pressure roller (17) is guided on at least one path (19) running parallel to the direction of movement of the piston rod.

4. Strip filter apparatus in accordance with claim 1, wherein the cover (4) is elastically (20, 21) articulated on the load arm of the lever (6) such that this cover can be adjusted shortly before reaching the point of closure by arrangement of the elastic seal (5) parallel to the enclosing container wall (2a) of the opening (3).

5. Strip filter apparatus in accordance with claim 4, wherein elastic intermediate layers (21) made of rubber or synthetic material are disposed between covers (4) and articulations (7) on the load-arm side of the levers (6).

6. Strip filter apparatus in accordance with claim 4, wherein pressure springs (19) are inserted between cover (4) and articulations (7) on the load-arm side of the levers (6).

## Revendications

1. Filtre à bande à volet pivotant (4) pour fermer, de façon étanche aux liquides, les fentes (3) agencées sur les côtés étroits du récipient de filtration (1) pour l'entrée et la sortie de la bande de filtration continue, le volet (4) agencé à l'extérieur du récipient (2) étant suspendu, en pouvant pivoter vers le haut, à un point d'articulation (10) au moyen de leviers à deux bras (6) et les leviers (6) étant couplés cinématiquement à la tige de piston (14) d'un vérin de travail (15) par l'intermédiaire de bielles (9) agencées du côté des bras de puissance,
caractérisé en ce qu'au moins deux bielles (9), agencées parallèlement l'une à l'autre, sont reliées, à leurs extrémités libres, par une barre (11) s'étendant transversalement à la direction d'extension des bielles, dans la zone médiane de laquelle s'engage la tige de piston (14) du vérin de travail (15), et en ce que, sur la barre (11), sont montés des galets de pression (17) qui s'appuient, lorsque la tige de piston (14) du vérin de travail (15) est déplacée en position d'extrémité, contre une butée (16), le point d'articulation (8) d'une bielle sur les leviers (6), le centre du galet de pression (17), ainsi que son point de contact sur la butée (16) se trouvant, à chaque fois, sur une droite imaginaire.

2. Filtre à bande à volet pivotant selon la revendication 1, caractérisé en ce que les butées (16) pour les galets de pression (17) sont réglables (18).

3. Filtre à bande à volet pivotant selon les revendications 1 et 2,
caractérisé en ce que le galet de pression (17) est guidé sur au moins une voie (19) s'étendant parallèlement à la direction de mouvement de la tige de piston.

4. Filtre à bande à volet pivotant selon la revendication 1, caractérisé en ce que le volet (4) est articulé de façon élastique (20,21) sur les bras de puissance des leviers (6), de sorte que celui-ci est réglable, peu avant d'atteindre la position de fermeture par appui du joint étanche élastique (5), parallèlement à la paroi (2a) du récipient entourant la fente (3).

5. Filtre à bande à volet pivotant selon la revendication 4, caractérisé en ce que des couches intermédiaires élastiques (21) en caoutchouc ou en matière synthétique sont agencées entre le volet (4) et les articulations (7), du côté des bras de puissance, sur les leviers (6).

6. Filtre à bande à volet pivotant selon la revendication 4, caractérisé en ce que des ressorts de pression (19) sont montés entre le volet (4) et les articulations (7), du côté des bras de puissance, sur les leviers (6).
